(19) Europäisches Patentamt

European Patent Office

Office européen des brevets

(11) **EP 4 787 811 A1**

(12) **EUROPEAN PATENT APPLICATION**

(43) Date of publication:
05.08.2026 Bulletin 2026/32

(21) Application number: 26154392.0

(22) Date of filing: 27.01.2026

(51) International Patent Classification (IPC):
*H04L 49/00* (2022.01)

(52) Cooperative Patent Classification (CPC):
H04L 49/3063; H04L 49/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 30.01.2025 US 202519041734

(71) Applicant: **Avago Technologies International
Sales
Pte. Limited
Singapore 768923 (SG)**

(72) Inventors:
• **Lau, Michael**
**Rockville, 20850 (US)**
• **Anubolu, Surendra**
**Fremont, 94539 (US)**
• **Griswold, Mark David**
**Fremont, 94539 (US)**
• **Agarwal, Prankul**
**560103 Bangalore (IN)**

(74) Representative: **Dilg, Haeusler, Schindelmann
Patentanwaltsgesellschaft mbH
Leonrodstraße 58
80636 München (DE)**

(54) **PACKET PROCESSING PIPELINE SHARING IN A NETWORK SWITCH**

(57) In an example, an apparatus in a network switch can include processing pipelines including outputs coupled to a switch circuit of the network switch; a first circuit coupled between port groups of the network switch and inputs of the processing pipelines, the first circuit configured to distribute packets output from the port groups among the processing pipelines; and a memory coupled to the processing pipelines; wherein the processing pipelines are configured to process streams of the packets through digital logic based on state for the port groups to generate results, supply the results to the switch circuit to switch the packets, and write and read the state to and from the memory.

FIG. 3

## Description

### BACKGROUND

A computer network (also referred to herein as a network) may be devices connected by network nodes for communication with one another. The devices can range from computing devices (e.g., personal computers, smartphones, wearables, etc.) to household devices (e.g., appliances, doorbells, thermostats, etc.) to devices in an automobile or other type of vehicle, among others. A network node may be a connection point in the network. Example network nodes include network switches, network hubs, network bridges, network routers, wireless access points, and the like. The scope of a network can differ depending on context. For example, a network can be devices connected to a single network switch. Thus, a network switch (also referred to as a switch) may be a network node that connects devices to create a network. A network can be devices connected to multiple switches. A network can be devices connected to one or more switches and a network router. A network router (also referred to as a router) may be a network node that can connect multiple switches and hence form a larger network. A network can be devices and network nodes disposed at a location, which can be referred to as a local area network (LAN). A network can be multiple connected LANs, which can be referred to as a wide area network (WAN). The public Internet is an example of a WAN. As used herein, the term network can have any scope unless otherwise confined, such as by location, by type, by a set of network nodes, etc.

A network switch can include switch ports. A switch port (also referred to herein as a port) may be a point of ingress to a switch (e.g., network traffic into the switch), egress from a switch (e.g., network traffic out of the switch), or both. Switch ports that receive ingress traffic can be coupled to packet processing pipelines. A processing pipeline (PP) may be multiple hardware functions that are operated concurrently. A hardware function may be a circuit that performs a function. The hardware functions can be heterogeneous. Alternatively, some of the hardware functions can be the same. A packet PP may be a PP that receives packets as input, processes the packets through the hardware functions, and generates results as output. The network switch can use the results from the packet PP to determine how the packets are to be switched among destinations. A network switch can have a static 1-to-1 relationship between a switch port and the packet PP through which its packets are processed.

A limiting factor for performance that can be achieved by a network switch can be the packet processing rate of the device. The packet processing rate may be the number of packets processed per unit of time. The packet processing rate can be determined, at least in part, by the number of, and operating frequency of, the packet PPs. One or both of these parameters can be increased to increase performance. The operating frequency parameter, however, may not be a meaningful way to increase performance. The effect on performance by adding additional packet PPs can be more nuanced. Since there can be a static 1-to-1 relationship between switch ports and corresponding packet PPs, only the limited number of switch ports connected to an additional packet PP can make use of the added capacity for processing packets. Consider an example where first switch ports connected to a first PP have low packet rate demand, while second switch ports connected to a second PP have a packet rate demand that is more than the second PP can provide. In this example, some of the capacity for packet processing provided by the first PP is unused, whereas the capacity for packet processing by the second PP is 100% consumed and insufficient to satisfy demand by the second switch ports. In this example, the capacity of the first PP may be considered as "stranded" and unable to be used to satisfy the packet processing rate demand of the network switch.

### SUMMARY

In some embodiments, an apparatus in a network switch can include processing pipelines including outputs coupled to a switch circuit of the network switch. The apparatus can include a first circuit coupled between port groups of the network switch and inputs of the processing pipelines, the first circuit configured to distribute packets output from the port groups among the processing pipelines. The apparatus can include a memory coupled to the processing pipelines. The processing pipelines can be configured to process streams of the packets through digital logic based on state for the port groups to generate results, supply the results to the switch circuit to switch the packets, and write and read the state to and from the memory.

In some embodiments, a method of processing packets in a network switch can include receiving packets at port groups of the network switch. The method can include distributing, by a first circuit, the packets output from the port groups among processing pipelines of the network switch. The method can include processing, by the processing pipelines, streams of the packets through digital logic based on state for the port groups to generate results. The method can include supplying the results to a switch circuit of the network switch to switch the packets. The method can include writing and reading the state to and from a memory of the network switch by the processing pipelines during processing of the streams of packets.

In some embodiments, a network switch can include port groups, a switch circuit coupled to the port groups, and a hardware platform coupled to the port groups and the switch circuit. The hardware platform can include processing pipelines including outputs coupled to the switch circuit. The hardware platform can include a first circuit coupled between the port groups and inputs of the processing pipelines, the first circuit configured to distribute packets output from the port groups among the processing pipelines. The hardware platform can include a memory coupled to the processing pipelines. The processing pipelines can be configured to process streams of the packets through digital logic based on state for the port groups to generate results, supply the results to the switch circuit to switch the packets, and write and read the state to and from the memory.

BRIEF DESCRIPTION OF THE DRAWINGS

Fig. 1 is a block diagram depicting a network according to some embodiments.
Fig. 2 is a block diagram depicting a network switch according to some embodiments.
Fig. 3 is a block diagram depicting a processing pipeline (PP) according to some embodiments.
Fig. 4 is a block diagram depicting a set of PPs in a network switch.
Fig. 5 is a block diagram depicting a set of PPs in a network switch according to some embodiments.
Fig. 6 is a flow diagram depicting a method of processing packets in a network switch according to some embodiments.

DETAILED DESCRIPTION

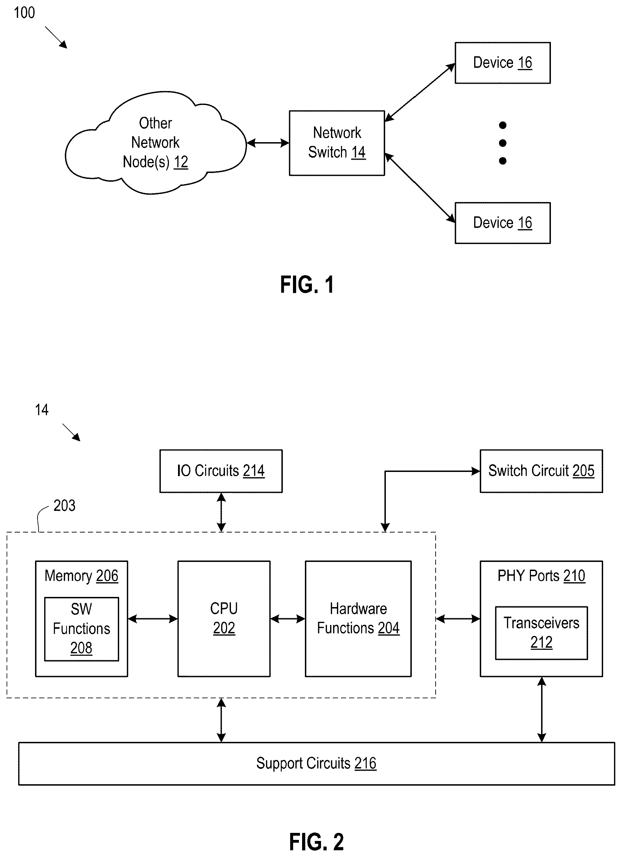

Fig. 1 is a block diagram depicting a network 100 according to some embodiments. Network 100 can include a network switch 14 connected to one or more devices 16. Devices 16 can be computing devices (e.g., personal computers, smartphones, wearables, etc.) to household devices (e.g., appliances, doorbells, thermostats, etc.) to devices in an automobile or other type of vehicle, among others. Network switch 14 can be coupled to one or more other network nodes 12.

Communication between devices and nodes of network 100 can be organized into layers, such as the layers defined by the well-known Open Systems Interconnection (OSI) model. The physical layer (also known as layer 1) may be the layer that provides an electrical, mechanical, and procedural interface to the transmission medium. The transmission medium may be the physical pathways through which data can be transmitted. The transmission medium can be wireline (e.g., twisted pair cable, coaxial cable, optical fiber cable, etc.), wireless, or a combination thereof. The data link layer (also known as layer 2) may be the layer that transfers data between network nodes using addresses for device identification while ensuring reliable transmission across the transmission medium. Ethernet is a widely used and well-known networking technology that implements the data link layer in a network. The network layer (also known as layer 3) may be the layer responsible for determining how data is transmitted between devices across different networks. Internet Protocol (IP) is a widely used and well-known networking technology that implements the network layer in a network. A primary role of the network layer is routing, which may be the process that ensures data is sent to the correct destination even when passing through multiple networks.

Network switch 14 can send and receive network traffic. Network traffic (hereinafter referred to as traffic) may be a quantum of packets transmitted or received over a given time. A packet may be a formatted unit of data. The data of a packet can be divided into control data and payload data, where the control data can provide information for delivering the payload data. Traffic can be transmitted and received using protocols at different network layers (e.g., different layers of the OSI model). A protocol data unit (PDU) may be a unit of data transmission for a given network layer. Different network layers can specify different types of PDUs. The term packet as used herein may refer to a PDU of a layer, such as the data link layer or the network layer. Packets of one layer can be encapsulated in packets of another layer.

Network switch 14 can receive ingress traffic from devices 16 and nodes 12. Network switch 14 can process the ingress traffic using packet PPs as discussed in embodiments below. Network switch 14 can use the results generated by the packet PPs to forward packets in the ingress traffic as egress traffic to devices 16 and nodes 12.

Fig. 2 is a block diagram depicting network switch 14 according to some embodiments. Network switch 14 can include a hardware platform 203, physical ports 210 (shown as PHY ports 210), input/output (IO) circuits 214, and support circuits 216. A hardware platform may be physical components of an electronic system (sometimes referred to as hardware). Hardware platform 203 can include physical components of network switch 14. In some embodiments, hardware platform 203 includes a central processing unit (CPU) 202, hardware functions 204, and a memory 206. A CPU may be a circuit that can interpret and execute instructions, and manipulate data, of software. Software may be instructions and data used to operate a computing device. A memory may be a circuit or circuits that store information. Memory 206 can include volatile memory, non-volatile memory, or a combination thereof. Volatile memory may be any type of memory circuit that requires power to maintain the stored information (e.g., RAM 24). Non-volatile memory may be any type of memory circuit that retains data even when the power is turned off or disconnected (e.g., read-only memory (ROM), erasable programmable ROM (EPROM), FLASH memory, etc.).

CPU 202 can execute software stored in memory 206. The software can include software functions 208. Hardware functions may be any type of operations of a device performed using circuits. Software functions may be any type of operations of a device performed using software. Hardware functions 204 can be operations of network device 200. CPU 202 can be coupled to hardware functions 204 for control thereof. Software functions 208 can be operations of network device 200. CPU 202 can be coupled to memory 206 to execute software functions 208.

Physical ports 210 may be circuits that provide a point of ingress and/or egress for network switch 200. Each physical port 210 can include a transceiver 212. A transceiver may be a circuit that can transmit and receive signals. Transceivers 212 can transmit and receive signals from a transmission medium of a network. Physical ports 210 can be supported by hardware platform 203. A component can be supported by hardware platform 203 by being controlled by hardware platform 203, by exchanging data with hardware platform 203, implemented by hardware platform 203, or any combination. Hardware platform 203 can control physical ports 210 (e.g., control configurable settings of physical ports 210). Hardware platform 203 and physical ports 210 can exchange data.

IO circuits may be circuits that facilitate receiving input data and sending output data. IO circuits 214 can receive input data for, and send output data from, hardware platform 203. IO circuits 214 can include circuits other than physical ports 210. Support circuits may be circuits that support hardware of a device. Support circuits 216 can support hardware platform 203 and physical ports 210. Support circuits 216 can include power supplies, circuit boards, backplanes, etc.

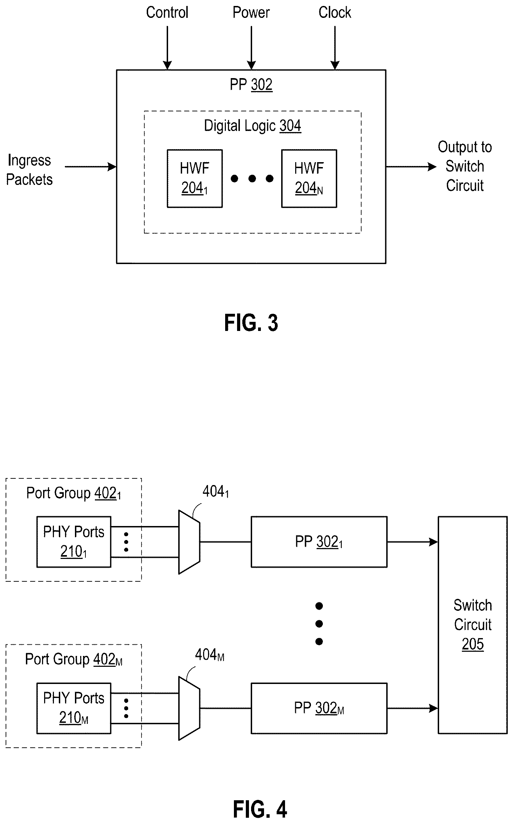

Fig. 3 is a block diagram depicting a processing pipeline (PP) 302 according to some embodiments. PP 302 can be implemented in network switch 14. PP 302 can include digital logic 304. Digital logic may be circuits that process digital signals. Digital logic 304 can include hardware functions (HWF) $204_1...204_N$. A hardware function may be a circuit that performs some function, e.g., some function for processing packets. PP 302 can receive ingress packets and output data to switch circuit 205. Ingress packets can be processed by HWFs 204 in digital logic 304 of PP 302. PP 302 can include inputs, including a control input, a power input, and a clock input. Clock input can receive a clock signal for clocking digital logic 304. Power input can receive power from a power supply. Control input can receive control signal(s) for controlling HWFs 204 of digital logic 304.

Fig. 4 is a block diagram depicting a set of PPs in a network switch. Network switch 14 can include PPs $302_1...302_M$. Inputs of PPs $302_1...302_M$ can be coupled to outputs of multiplexers $404_1...404_M$. Outputs for PPs $302_1...302_M$ can be coupled to inputs of switch circuit 205. Inputs of multiplexer $404_1$ can be coupled to outputs of PHY ports $210_1$; inputs of multiplexer $404_2$ can be coupled to outputs of PHY ports $210_2...$; inputs of multiplexer $404_M$ can be coupled to outputs of PHY ports $402_M$. PHY ports $210_1...210_M$ can be in port groups $402_1...402_M$, respectively. A port group may be a plurality of physical ports. Each PP $302_1...302_M$ can be configured as shown in Fig. 3, for example.

In a network switch, the job of the PP can be to parse the contents of each ingress packet and determine how that packet will be routed to an egress destination on the switch. A limiting factor for performance that can be achieved by the switch is often the packet processing rate of the device. The device packet processing rate can be determined by the operating frequency of the device and the number of packet processing pipelines implemented on the device. To scale up the device throughput, one or both of these parameters can be increased. The frequency parameter has not been a meaningful way to scale up performance, despite progressing through multiple generations of semiconductor process nodes. That leaves the second parameter of adding additional PPs. The main problem with simply adding additional PPs to scale device bandwidth is that there is a static 1-to-1 relationship between a physical port and the PP through which all of its packets must be processed. In other words, the packet rate capacity that is added with an additional PP is only usable by the limited number of physical ports connected to it.

This fixed connection means that when the ports of a PP (e.g., PP $210_1$) have low load or low packet rate demand, that PP's processing capacity will go largely unused, even though there is another PP (e.g., PP $210_2$) that is oversubscribed, with ports that are demanding a higher packet rate than PP $210_2$ can provide. In this example, the processing capacity of PP $210_1$ is "stranded" and unable to be used to satisfy the packet rate demand of the device. This stranding of packet processing capacity is a problem addressed by embodiments below. Typical network traffic demand is not uniform, as it varies up and down over time and across ports. As the total switch throughput of devices grows, having each PP dedicated to small percentage of the switch throughput is inefficient because it results in PPs being easily stranded. The implementation area of each PP is significant, so being able to have each PP more widely utilized improves device performance.

Embodiments described below enable each PP to be accessible by a wider group of ports, and enables each port to have access to more than just one PP. Doing so can enable the device to perform significantly better over a wider and more general range of traffic scenarios. A second problem addressed by the embodiments below is that lowering the max power of the device will result in degradation of multiple other performance characteristics. A method to lower max power can be to throttle or limit the max packet rate that a PP can achieve. The expected tradeoff in achieving this max power reduction is an increase in the average packet size under which the device meets full throughput. However, when there is a fixed connection between a port and a single PP, lowering the max packet rate will also have other undesirable side effects on performance.

Lowering packet rate can be achieved using different techniques. One technique is to force idle packet cycles into the PP. Another technique is to lower the frequency of the PP. Since there is only one PP for a set of ports, forcing in idle cycles must be done equally on all PPs. This achieves the intent of lowering the power under max loading, but it also decreases performance for lower load cases. When only a fraction of the ports are active, the max packet rate a single port can achieve is limited by the lowered packet rate of the PP. This is similar to "stranding" where the port would ideally be able to consume packet rate from a single full rate PP without violating the lower max power requirement. When lowering max power by reducing the clock frequency of the PP, in addition to the above side effect, there can be a side effect of increased latency. The PP can be a fixed delay pipeline, so lowering the clock frequency directly increases the clock period and consequently the packet latency through the device is increased proportionally to the change in frequency.

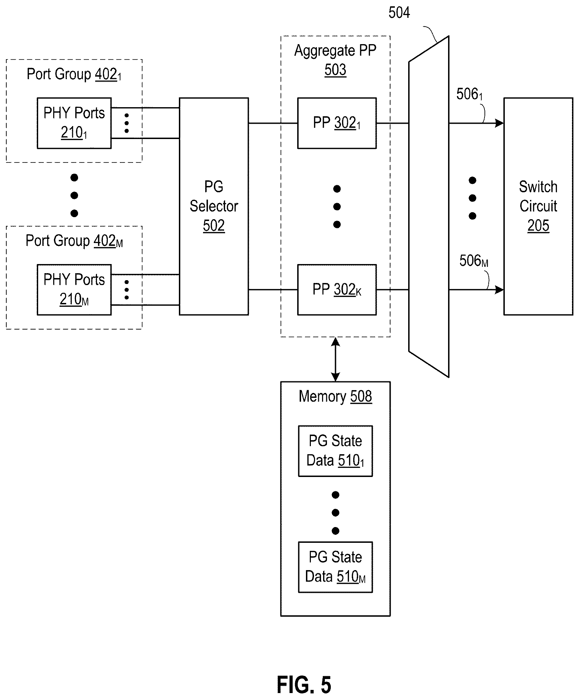

Fig. 5 is a block diagram depicting a set of PPs in a network switch according to some embodiments. The configuration in Fig. 5 can provide improvements over the configuration shown in Fig. 4. As shown in Fig. 5, network switch 14 can include PPs $302_1...302_K$. PPs 302 are part of an aggregate PP 503. Network switch 14 can include a PG selector 502 coupled between port groups 402 and aggregate PP 503. Outputs of PHY ports 210 in port groups 402 are coupled to inputs of PG selector 502. Outputs of PG selector 502 are coupled to inputs of PPs $302_1...302_K$. Network switch 14 can include a demultiplexer 504. Outputs of PPs $302_1...302_K$ can be coupled to inputs of demultiplexer 504. Outputs of demultiplexer, $506_1...506_M$, can be coupled to inputs of switch circuit 205. Network switch 14 can include a memory 508. Memory 508 can store PG state data $510_1...510_M$. PPs $302_1...302_K$ can be coupled to memory 508.

The ports of network switch 14 can be organized into port groups 402, where each port group 402 can represent an amount of I/O bandwidth that is divided among a combination of port speeds. For example, a 3.2 Tbps port group that can be configured as 8x400 Gbps ports or 2x800 Gbps + 8x200 Gbps ports. In the configuration of Fig. 4, the switch may be only able to support a limited number of port groups tied to a single PP, so the ports in those port groups could use that one and only one PP. The embodiments in Fig. 5 can address this problem by grouping multiple PPs 302 (K) into an aggregate PP 503 and enabling multiple port groups 402 (M) to have access to any of the K PPs 302 in that aggregate PP 503. PPs 302 within aggregate PP 503 can be referred to as PP threads.

Creating a grouping which includes M port groups and K PP threads has some immediate benefits. Ports now have access to multiple PPs, so if a particular PP is busy with heavier loading from other ports' packets, a different port can still have its next packet processed in the same cycle, using another PP in the aggregate PP. The other consequence is that the amount of port I/O bandwidth that is able to share the packet processing capacity of an aggregate PP is significantly increased compared the configuration of Fig. 4, which can lower the possibility of "stranding" of PP resources. In an example, K=3 and M=4. That is, there can be 4 port groups of 3.2 Tbps each, which are sharing the packet processing capacity of an aggregate PP 503 with 3 PP threads. The granularity of bandwidth sharing can be increased 4x from 3.2Tbps to 12.8Tbps, while the number of PPs required is only increased by 3 (in the example).

As shown in Fig. 5, the packets from each of the port groups are serviced by an arbitration block, PP selector 502. PG selector 502 can distribute the packets for processing across PPs 302 in aggregate PP 503. Each PP thread can process one packet per cycle, so aggregate PP 503 can have a processing capacity of K packets per cycle. Once processing is complete, the result of the processing can be the packet destination as well as metadata for the packet, which is used by the downstream switching blocks. These results are sent downstream to each of the parallel packet streams (506) to allow the packet to be switched to its final destination. In some embodiments, a first bandwidth for each of PPs $302_1...302_K$ is the same or less than a second bandwidth of aggregate PP 503.

The primary challenge of utilizing aggregate PP 503 is how to ensure that processing results are the same as if a single PP was used. The processing performed on a packet may not be solely based on the contents of the packet but can also be based on state that is maintained for the flow or port. This state can be maintained by the PP and the state can vary over time based on packets received. In the configuration of Fig. 4, when all packets from a port were processed through the same PP, the state can be maintained internally by the PP, and the order of packets through the PP can match the order that the state information was accessed. With aggregate PP 503, the state cannot be maintained within the PP thread because consecutive packets from the same port could be processed by different PP threads, and they would need to access and update the same state in the correct order. Thus, in embodiments, PG state data $510_1...510_M$ can be stored in memory 508 external to the PP threads but can be accessed by any of the PP threads. Each PG state data 510 can include all the variable state information that needs to be maintained for a single port group. When a PP thread is processing a packet from a particular port group, it will access the corresponding PG state data 510 and retrieve the state for the port or flow needed to process the packet.

In some embodiments, memory 508 can include multiple memory circuits, e.g., M memory circuits. Each memory circuit can store a respective one of PG state data $510_1...510_M$. Each PP $302_1...302_K$ can be coupled to any one of the memory circuits through a bus (e.g., another circuit that performs arbitration). In another embodiment, memory 508 comprises one memory circuit that stores PG state data $510_1...510_M$. Each PP $302_1...302_K$ can be coupled to the memory 508. In some embodiments, memory 508 can have multiple ports (e.g.,

multiple read ports, multiple write ports).

Another aspect of PG state data can be to make sure that multiple PP threads do not try to access the same state at the same time. Avoiding this conflict can achieve two benefits. It can ensure a deterministic packet order is maintained for packets from the same port or flow, identical to that of a single PP structure. Secondly, it can avoid significant implementation area penalties because the access bandwidth to the PG state data can be enforced to a maximum of one access per cycle. An embodiment to avoid this conflict is described below. In embodiments, each PP thread can process one packet in a single clock cycle. While a port group is able to have a packet processed by any of the K PP threads, only one packet from the same port group can be processed in a single PP cycle across all PP threads. The PP threads of aggregate PP 503 can all operate in the same clock domain and can be synchronous. Therefore, the K packets which enter the K threads in the same clock cycle can flow down in parallel through every PP stage in lockstep. This policy can be enforced by PG selector 502 that is responsible for selecting up to K packets from the M port groups to send aggregate PP 503 in each clock cycle.

PG selector 502 can select K packets from among the M port groups, selecting at most one packet from each port group. Each of these K packets can be sent to one of the K PP threads without restriction on which threads were used by previous packets from the same port or flow. As mentioned above, PG state data 510 in memory 508 can be accessed by the PP threads. Therefore, by limiting the number of simultaneous packets from a PG, this ensures that the K memory accesses from the same PP stage across the K PP threads do not try to access the same PG state data 510. Note that in addition to enforcing the above selection policy, PG selector 502 can apply a selection policy for how to choose packets across the M port groups. Different policies can have different effects on behavior and efficiency, but the choice of policy is not restricted by the embodiments. Any known arbitration can be used.

Another benefit the embodiments is enabling a max power limit without sacrificing performance at lower loads. When K PP threads are aggregated together, the maximum power will be consumed when aggregate PP 503 is processing a total of K packets per cycle. In order to enforce a lower max power, this value can be limited to a lower value, like $\frac{2}{3}$ K or ½ K, for example. PG selector 502 can be configured to select a fewer number of packets each cycle, which will throttle packet rate and limit the max power. A port group can achieve its maximum performance when it is serviced at one packet per clock cycle. Therefore, as long as the packet rate limit is greater than or equal to one packet per cycle, the best case performance of a port group will not be affected by the max packet rate limit. If we compare Fig. 4, the max packet rate of a single PP is already at one packet per cycle. So if a packet rate throttle is applied to limit max power, it must reduce the packet rate to something less than one. This means that the best case performance of the port group will be affected because it is now impossible for it to achieve a packet rate of one packet per cycle.

In an example, K=3 and the max performance mode allows a max packet rate of 3 packets per cycle. In low power mode, the packet rate limit can be reduced to 1.5, which means PG selector 502 can limit packet rate to an average of 1.5 packets per cycle. Since 1.5 is still > 1, a single port group will still be able to attain its best case performance when it has maximum load, and other port groups have low or no load.

In the embodiments above, ingress packets received by physical ports are processed by PPs and the results delivered to the switch circuit. In other embodiments, PPs can be used in the egress direction. Thus, similar to that show in Fig. 3, a PP can receive egress packets from the switch circuit and the results delivered to the physical ports. As shown in Fig. 4, PHY ports 210 and switch circuit 205 can be swapped in the case of PPs 302 that process egress packets rather than ingress packets. Likewise, as shown in Fig. 5, PHY ports 210 and switch circuit 205 can be swapped in case of aggregate PP 503 that process egress packets rather than ingress packets.

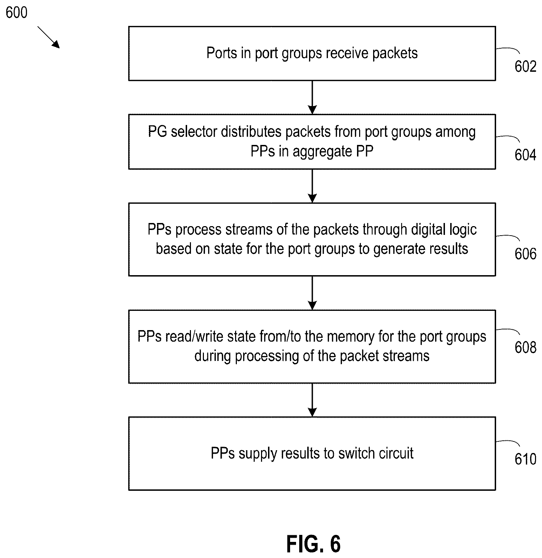

Fig. 6 is a flow diagram depicting a method 600 of processing packets in a network switch according to some embodiments. Method 600 begins at step 602, where ports in port groups can receive packets. At step 604, PG selector 602 can distribute packets output from the port groups among the PPs in aggregate PP 503. At step 606, the PPs can process streams of the packets through digital logic based on state for the port groups to generate results. At step 608, the PPs can read/write state from/to the memory for the port groups during processing of the packet streams. At step 610, the PPs can supply the results to switch circuit 205 in the network switch.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

As used herein, the term "couple" and its derivatives include: (a) electrical, magnetic, and communicative coupling; and (b) do not imply a direct connection, but rather may include intervening elements, unless described as "directly coupled."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1.   An apparatus in a network switch, comprising:

    processing pipelines including outputs coupled to a switch circuit of the network switch;
    a first circuit coupled between port groups of the network switch and inputs of the processing pipelines, the first circuit configured to distribute packets output from the port groups among the processing pipelines; and
    a memory coupled to the processing pipelines;

    wherein the processing pipelines are configured to process streams of the packets through digital logic based on state for the port groups to generate results, supply the results to the switch circuit to switch the packets, and write and read the state to and from the memory.

2.   The apparatus of claim 1, wherein the memory comprises:
    memory circuits configured to store the state for the port groups, each of the memory circuits configured to store a respective portion of the state for at least one of the port groups; wherein the apparatus comprises a second circuit configured to arbitrate access to the memory circuits among the processing pipelines.

3.   The apparatus of claim 1 or 2, wherein the memory is configured to
    store respective portions of the state for respective ones of the port groups, wherein the memory includes multiple ports, and wherein the processing pipelines are configured to access the memory via the ports.

4.   The apparatus of any one of the claims 1 to 3, wherein
    a first bandwidth for each of the processing pipelines is the same or less than a second bandwidth of the processing pipelines in aggregate.

5.   The apparatus of any one of the claims 1 to 4, further comprising:
    a second circuit configured to couple outputs of the processing pipelines to inputs of the switch circuit.

6.   The apparatus of claim 5, comprising
    M port groups and K processing pipelines, where M and K are integers, and where the second circuit is configured to couple K of the streams of packets to M of the inputs of the switch circuit.

7.   The apparatus of claim 6, wherein K is less than M.

8.   A method of processing packets in a network switch, comprising:

    receiving packets at port groups of the network switch;
    distributing, by a first circuit, the packets output from the port groups among processing pipelines of the network switch;
    processing, by the processing pipelines, streams of the packets through digital logic based on state for the port groups to generate results;
    supplying the results to a switch circuit of the network switch to switch the packets; and
    writing and reading the state to and from a memory of the network switch by the processing pipelines during processing of the streams of packets.

9. The method of claim 8, wherein
the memory comprises memory circuits, and wherein each of the memory circuits is configured to store a respective portion of the state for at least one of the port groups.

10. The method of claim 8 or 9, wherein
the memory is configured to store respective portions of the state for respective ones of the port groups, wherein the memory includes multiple ports, and wherein the processing pipelines are configured to access the memory via the ports.

11. The method of any one of the claims 8 to 10, wherein
a first bandwidth for each of the processing pipelines is the same or less than a second bandwidth of the processing pipelines in aggregate.

12. The method of any one of the claims 8 to 11, further comprising:
coupling, by a second circuit, outputs of the processing pipelines to inputs of the switch circuit.

13. The method of claim 12, comprising
M port groups and K processing pipelines, where M and K are integers, and where the second circuit is configured to couple K of the streams of packets to M of the inputs of the switch circuit.

14. The method of claim 13, wherein K is less than M.

15. A network switch, comprising:

port groups;
a switch circuit coupled to the port groups;
a hardware platform coupled to the port groups and the switch circuit, the hardware platform comprising an apparatus of any one of the claims 1 to 7.

100

Other
Network
Node(s) 12

Network
Switch 14

Device 16

•
•
•

Device 16

**FIG. 1**

14

203

IO Circuits 214

Switch Circuit 205

Memory 206

SW
Functions
208

CPU
202

Hardware
Functions 204

PHY Ports 210

Transceivers
212

Support Circuits 216

**FIG. 2**

Control          Power          Clock

PP 302

Digital Logic 304

HWF
204₁

• • •

HWF
204ₙ

Ingress
Packets

Output to
Switch
Circuit

**FIG. 3**

Port Group 402₁

PHY Ports
210₁

404₁

PP 302₁

Switch
Circuit
205

Port Group 402ₘ

PHY Ports
210ₘ

404ₘ

PP 302ₘ

**FIG. 4**

FIG. 5

600

Ports in port groups receive packets — 602

PG selector distributes packets from port groups among PPs in aggregate PP — 604

PPs process streams of the packets through digital logic based on state for the port groups to generate results — 606

PPs read/write state from/to the memory for the port groups during processing of the packet streams — 608

PPs supply results to switch circuit — 610

FIG. 6

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 943 128 B1 (MATTHEWS WILLIAM BRAD [US] ET AL) 26 March 2024 (2024-03-26) * columns 25,28-34; figures 5,6 * ----- | 1-15 | INV. H04L49/00 |
| A | WO 2023/104292 A1 (ERICSSON TELEFON AB L M [SE]) 15 June 2023 (2023-06-15) * paragraph [0032] - paragraph [0057]; figures 1,2 * ----- | 1-15 | |

TECHNICAL FIELDS SEARCHED (IPC)

H04L

The present search report has been drawn up for all claims

| Place of search | Date of completion of the search | Examiner |
|---|---|---|
| The Hague | 19 May 2026 | Boureanu, Vlad |

EPO FORM 1503 03.82 (P04C01)

**EP 4 787 811 A1**

## ANNEX TO THE EUROPEAN SEARCH REPORT
## ON EUROPEAN PATENT APPLICATION NO.

EP 26 15 4392

This annex lists the patent family members relating to the patent documents cited in  the above-mentioned European search report.
The members are as contained in the European Patent Office EDP file on
The European Patent Office is in no way liable for these particulars which are merely given for the purpose of information.

19-05-2026

| Patent document cited in search report | | Publication date | Patent family member(s) | | Publication date |
|---|---|---|---|---|---|
| US 11943128 | B1 | 26-03-2024 | US | 11621904 B1 | 04-04-2023 |
| | | | US | 11943128 B1 | 26-03-2024 |
| WO 2023104292 | A1 | 15-06-2023 | NONE | | |

For more details about this annex : see Official Journal of the European Patent Office, No. 12/82